# EUROPEAN PATENT SPECIFICATION

(11) **EP 3 268 629 B1**
(45) Date of publication and mention of the grant of the patent: **10.04.2019**
(21) Application number: 16706361.9
(22) Date of filing: 26.02.2016
(51) Int. Cl.: F16D 48/08

(54) **CLUTCH CONTROL FOR PROVIDING AN INDICATION TO A DRIVER**
KUPPLUNGSSTEUERUNG ZUR BEREITSTELLUNG EINER ANZEIGE FÜR EINEN FAHRER
COMMANDE D'EMBRAYAGE POUR FOURNIR UNE INDICATION À UN CONDUCTEUR

(30) Priority: 10.03.2015 GB 201504054
(43) Date of publication of application: 17.01.2018
(73) Proprietor: Jaguar Land Rover Limited, Coventry, Warwickshire CV3 4LF (GB)
(72) Inventor: GABELA, Philip, Coventry Warwickshire CV3 4LF (GB); AFTANASA, Florin, Coventry Warwickshire CV3 4LF (GB); WALSH, Joseph, Coventry Warwickshire CV3 4LF (GB)
(74) Representative: Borton, Claire
(86) International application number: PCT/EP2016/054042
(87) International publication number: WO 2016/142186

(56) References cited:
- EP-A1- 1 616 770
- WO-A1-03/087614
- DE-A1-102011 104 085
- US-A- 4 499 450

## Description

### TECHNICAL FIELD

The present disclosure relates to clutch control for providing an indication to a driver. More particularly, but not exclusively, the present disclosure relates to controlling a clutch to provide an indication to a driver regarding a condition of a vehicle. Aspects of the invention relate to a system, a vehicle and a method.

### BACKGROUND

Automotive vehicles typically include a transmission for delivering torque produced by the engine to the wheels. A clutch selectively couples the engine with the transmission in a well-known manner. Manual transmissions typically require the driver to select a gear and to control clutch engagement by using a clutch pedal, for example. Automatic transmissions do not require manual gear selection or clutch control.

With manual transmissions, it is possible for a driver to reduce vehicle speed without changing a current gear of the transmission. If the transmission is in too high of a gear there may be consistency issues between the engine speed and the transmission gear that interfere with further vehicle movement. For example, after the vehicle has come to rest, it may not be possible to launch the vehicle without changing gears. Under such circumstances it would be useful to be able to prompt the driver to take action.

It is an aim of embodiments of this invention to avoid drawbacks or shortcomings associated with known systems.

In DE 102011104085, a method of automatically operating a friction clutch is described, in which a control device stays in signal connection with a driver assistance system. A sensor system detect a tiredness condition of a driver, and a control impulse for modulation of the clutch is provided to the control device after the detection of the tiredness.

An electromagnetic clutch is described in US4499450 which comprises a circuit for detecting the difference between numbers of revolutions of a drive member and driven member, a comparator for producing an output when the difference is higher than a reference value, a timer operated by the output of the comparator, and a warning device such as a buzzer operated by the signal from the timer when a predetermined time elapses.

In EP1616770, a driving situation such as creeping, starting off and driving of the vehicle, is determined, after which energy input in the clutch is determined , continuously. An overload state of clutch is prevented or reduced through targeted intervention in vehicle management as a function of determined driving situation and energy input in the clutch.

A method for monitoring a clutch on a gearbox of a vehicle with an active creep function is is described in WO03/087614, whereby, on reaching a given threshold value for at least one engine and/or gearbox parameter, a warning signal is given to the driver and/or the clutch transmission properties are adjusted.

### SUMMARY OF THE INVENTION

An illustrative example embodiment of a system for providing an indication to a driver includes a clutch that is at least partially automatically controllable and clutch control means for controlling the clutch in a manner that results in a haptic indication to a driver based on at least a need to shift a gear of an associated transmission.

In an embodiment having one or more features of the system of the previous paragraph, the clutch control means automatically adjusts an amount of engagement of the clutch to cause the haptic indication.

In an embodiment having one or more features of the system of any of the previous paragraphs, the clutch control means automatically and repeatedly causes engagement of the clutch to increase and decrease.

In an embodiment having one or more features of the system of any of the previous paragraphs, the clutch control means automatically causes clutch engagement to oscillate between two engagement conditions.

In an embodiment having one or more features of the system of any of the previous paragraphs, the haptic indication comprises vibration of at least one component associated with the clutch.

In an embodiment having one or more features of the system of any of the previous paragraphs, the haptic indication simulates an impending engine stall.

An illustrative example embodiment of a vehicle includes the system of any preceding paragraph, an engine associated with the clutch, and the transmission associated with the clutch. The automatically controlling of an at least partially automatically controllable clutch in a manner that results in a haptic indication to a driver is further based on a speed of the engine corresponding to a vehicle stop, the driver indicating a desire to increase the speed of the engine, and the transmission being in a gear that is not suitable to start movement of the vehicle from stop.

In an embodiment having one or more features of the vehicle of the previous paragraph the haptic indication is intended to prompt the driver to shift the transmission into a different gear.

In an embodiment having one or more features of the vehicle of any of the previous paragraphs the clutch is manually controllable and the transmission is manually controllable.

An illustrative example embodiment of a method of providing an indication to a driver includes automatically controlling an at least partially automatically controllable clutch in a manner that results in a haptic indication to a driver based on at least a need to shift a gear of an associated transmission.

An embodiment having one or more features of the method of the previous paragraph includes automatically adjusting an amount of engagement of the clutch to cause the haptic indication.

An embodiment having one or more features of the method of any of the previous paragraphs includes automatically and repeatedly causing engagement of the clutch to increase and decrease.

An embodiment having one or more features of the method of any of the previous paragraphs includes automatically causing clutch engagement to oscillate between two engagement conditions.

In an embodiment having one or more features of the method of any of the previous paragraphs, the haptic indication comprises vibration of at least one component associated with the clutch.

In an embodiment having one or more features of the method of any of the previous paragraphs, the haptic indication simulates an impending engine stall.

In an embodiment having one or more features of the method of any of the previous paragraphs, the automatically controlling of an at least partially automatically controllable clutch in a manner that results in a haptic indication to a driver is further based on an attempted start from stop of an associated vehicle.

In some but not necessarily all examples of the present disclosure there is provided a system for providing an indication to a driver includes a clutch that is at least partially automatically controllable and clutch control means for controlling the clutch in a manner that results in a haptic indication to a driver based on at least one predefined condition.

In some but not necessarily all examples of the present disclosure there is a method of providing an indication to a driver includes automatically controlling an at least partially automatically controllable clutch in a manner that results in a haptic indication to a driver based on at least one predefined condition.

Aspects and embodiments of the invention provide a system, a vehicle, and a method claimed in the appended claims;

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 diagrammatically illustrates an example embodiment of a vehicle including a driver indicator system designed according to an embodiment of this invention;
Figure 2 schematically illustrates selected portions of a vehicle including a driver indicator system designed according to an embodiment of this invention;
Figure 3 is a flowchart diagram summarizing an example driver indication strategy; and
Figures 4A-4D illustrate an example scenario including clutch control for providing an indication to a driver according to an embodiment of this invention.

### DETAILED DESCRIPTION

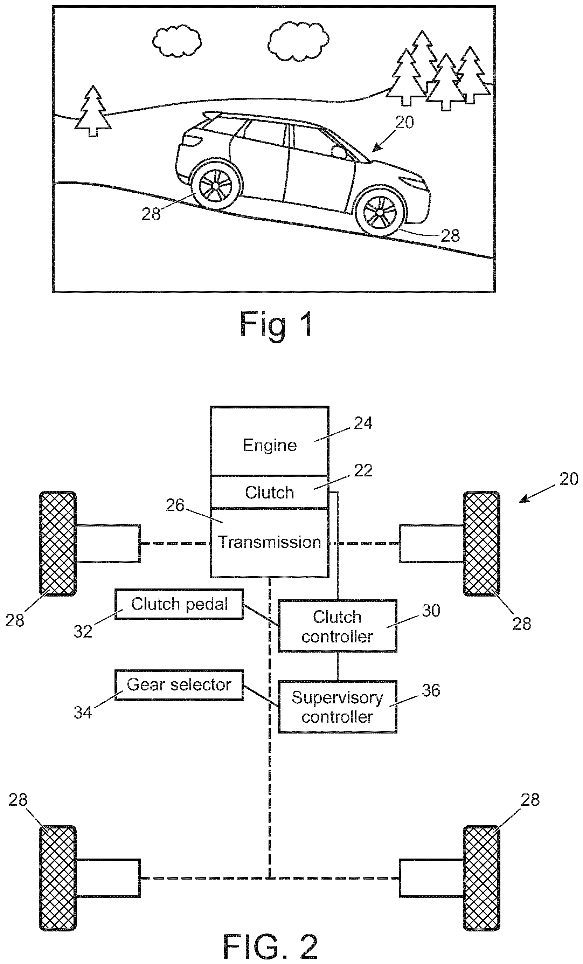

Figures 1 and 2 illustrate selected features of a vehicle 20. A clutch 22 selectively couples an engine 24 and transmission 26 for delivering torque to wheels 28 to cause desired movement of the vehicle 20. The clutch 22 in this example is at least partially automatically controllable. A clutch control means 30 is provided for controlling or modifying operation of the clutch 22 under selected circumstances. The clutch control means 30 in some examples comprises a processor or electronic controller that is suitably programmed to achieve the desired clutch control. The processor may be a dedicated or distinct device or may be a portion of a processor that performs other functions or operations. Some embodiments include several processors that contribute to clutch control, such as by communicating over a network.

The example of Figure 2 includes a manual clutch control means 32 for allowing a driver to manually control whether the clutch 22 is released or engaged. In some examples, the manual clutch control means 32 comprises a clutch pedal that may be manipulated by a driver to control the engagement of the clutch 22.

In the illustrated example, the transmission 26 is a manual transmission. A gear selection means 34 for manually selecting a gear provides manual control to a vehicle driver. In one example, the gear selection means comprises a stick shift mechanism or a moveable handle that can be manipulated to select a gear.

A supervisory control means 36 monitors information regarding vehicle performance, a condition of the engine 24, clutch 22 and transmission 26. In this example, the supervisory control means 36 communicates with the clutch control means 30 under selected conditions to provide information to the clutch control means 30 for controlling the clutch 22 in a manner that provides an indication to a driver of the vehicle 20 regarding a condition that requires driver attention, for attention. The supervisory control means 36 in some embodiments comprises a processor suitably programmed according to the needs of a particular vehicle and system embodiment. While the clutch control means 30 and the supervisory control means 36 are illustrated separately in Figure 2, it is possible to realize both of them using a single processor unit.

Those skilled in the art who have the benefit of this description will realize what combination of electronics, software and firmware will best meet their particular needs.

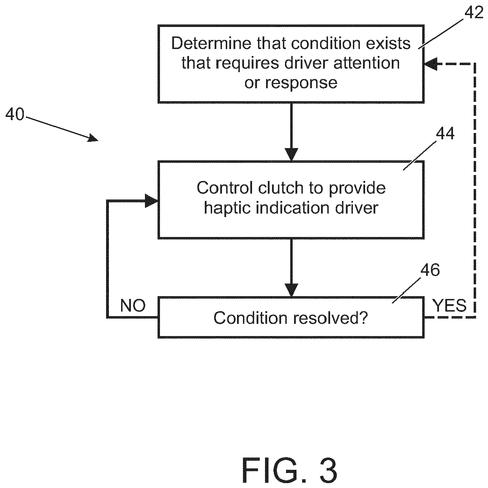

Figure 3 is a flowchart diagram 40 summarizing an example approach for providing an indication to a driver. At 42, a determination is made that a condition exists that requires driver attention or response. The supervisory control means 36 makes this determination according to an example embodiment. At 44, the clutch control means 30 controls the clutch 22 in a manner that provides a haptic indication to a driver regarding a condition that was determined to exist at 42. At 46, a determination is made whether the condition has been resolved. If not, the clutch control at 44 continues until the condition has been resolved or a preset time limit has expired, or a different strategy is implemented. Once the condition has been resolved, the supervisory control means 36 continues monitoring whether another condition exists that may require providing an indication to a driver.

One example situation in which a haptic driver indication would be useful is when a driver has reduced the speed of the vehicle while leaving the transmission 26 in a high gear. If the driver brings the vehicle to a rest, for example, starting the vehicle from stop requires the transmission 26 to be in a suitable gear, such as first gear. If the driver has not shifted out of a higher gear utilized prior to bringing the vehicle to a stop, the vehicle may not be successfully launched.

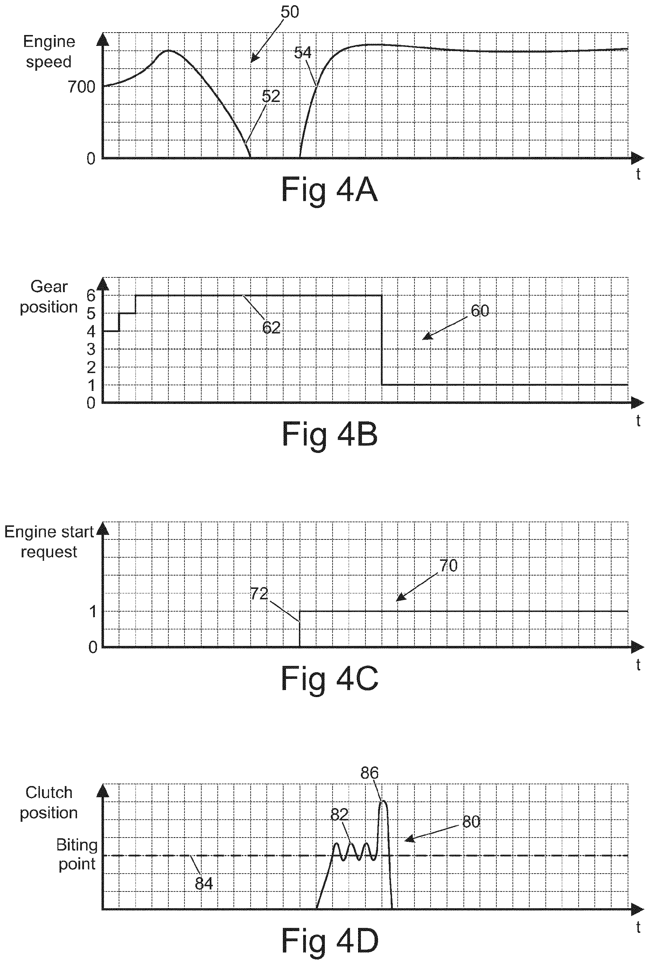

Figures 4A-4D illustrate an example scenario in which controlling the clutch 22 is useful for providing a haptic indication to the driver that can prompt the driver to shift gears so that a successful start from stop launch may occur. Figure 4A includes a plot 50 of engine speed over time. As shown at 52, the engine speed decreases as the driver slows the vehicle down. In this particular example, the vehicle is brought to a stop and the engine speed is shown at zero in Figure 4A. Figure 4B includes a plot 60 showing the currently engaged gear of the transmission 26. As can be appreciated by comparing Figures 4A and 4B, the transmission remains in sixth gear even though the driver has brought the vehicle to a stop.

Referring to Figures 4A and 4C, the engine speed increases at 54 as the driver indicates a desire to launch the vehicle from stop. Figure 4C includes a plot 70 showing an engine start request initiated at 72. As can be appreciated from Figures 4A and 4C, the engine speed begins to increase at 54 at the engine start request 72. Given that the transmission is currently in sixth gear as shown at 62, the supervisory control means 36 determines that driver attention is required for shifting the transmission 26 into a lower gear. The supervisory control means 36 communicates with the clutch control means 30 so that the clutch control means 30 may automatically control the clutch 22 in a manner that will provide a haptic indication to the driver for prompting the driver to shift gears.

Figure 4D includes a plot 80 showing automatic clutch position control achieved by the clutch control means 30. Given that engine speed is increasing at 54 and the transmission is currently in sixth gear as shown at 62, the clutch control means 30 automatically adjusts engagement of the clutch 22 in a manner that repeatedly alters the engagement as shown at 82. In this example, the amount of clutch engagement is varied or oscillated about a biting point shown at 84. The result of controlling the clutch in this way causes vehicle vibration or movement that simulates an impending engine stall. The driver will haptically notice the simulated stall behaviour and realize that attention is required for launching the vehicle from stop. In some situations, the driver may instinctively downshift into a lower gear. In some embodiments, a separate visual or audible indication may also be provided to the driver indicating that the gear selection means 34 should be manipulated to shift the transmission 26 into a lower gear.

As can be appreciated from Figures 4B and 4D, once the driver downshifts into first gear, the automated clutch control changes as shown at 86 corresponding to the gear change.

In some embodiments, the clutch control means 30 monitors driver operation of the manual clutch control means 32 for purposes of determining whether to allow the manual clutch control to override automatic clutch control based upon information that the driver is utilizing the gear selection means 34 and the manual clutch control means 32 in a manner that indicates that the driver is attempting to shift the transmission 26 into an appropriate gear for launching the vehicle from rest. In some embodiments, the automatic control over the clutch 22 continues until the driver realizes to shift the transmission into an appropriate gear and the driver is not required to utilize manual control over the clutch under such conditions. In some embodiments, the automated clutch control associated with providing a haptic indication to the driver overrides any attempt by the driver to manually control the clutch engagement condition.

While a vehicle start from stop condition is described as an example scenario in which a haptic indication can be provided to a driver, embodiments of this invention are not limited to that scenario. Those skilled in the art who have the benefit of this description will realize other conditions in which automated clutch control for providing a haptic indication to a driver will be useful. As can be appreciated from this description, embodiments of this invention allow for providing a haptic indication to a driver to alert the driver to a situation or condition that requires some action or response from the driver.

## Claims

1. A system for providing an indication to a driver, comprising:
a clutch (22) that is at least partially automatically controllable; and
clutch control means (30) configured to:
control the clutch (22) in a manner (44) that results in a haptic indication to a driver based on at least a need to shift a gear of an associated transmission (26).

2. The system of claim 1, wherein the clutch control means automatically adjusts an amount of engagement of the clutch (22) to cause the haptic indication.

3. The system of claims 1 or 2, wherein the clutch control means (30) automatically and repeatedly causes engagement of the clutch to increase and decrease.

4. The system of any preceding claim, wherein the clutch control means (30) automatically causes clutch (22) engagement to oscillate between two engagement conditions.

5. The system of any preceding claim, wherein the haptic indication comprises vibration of at least one component associated with the clutch (22).

6. The system of any preceding claim, wherein the haptic indication simulates an impending engine (24) stall.

7. A vehicle comprising the system of any preceding claim and comprising an engine (24) associated with the clutch; and
the transmission (26) associated with the clutch (22); wherein the automatically controlling of an at least partially automatically controllable clutch in a manner that results in a haptic indication to a driver is further based on:
a speed of the engine (24) corresponding to a vehicle stop; the driver indicating a desire to increase the speed of the engine (24); and
the transmission (26) being in a gear that is not suitable to start movement of the vehicle from stop.

8. The vehicle of claim 7, wherein the haptic indication is intended to prompt the driver to shift the transmission into a different gear.

9. The vehicle of claim 7 or 8, wherein
the clutch (22) is manually controllable; and the transmission (26) is manually controllable.

10. A method of providing an indication to a driver, comprising:
automatically controlling an at least partially automatically controllable clutch (22) in a manner that results in a haptic indication to a driver based on at least a need to shift a gear of an associated transmission (26) .

11. The method of claim 10, comprising automatically adjusting an amount of engagement of the clutch (22) to cause the haptic indication.

12. The method of claims 10 or 11, comprising automatically and repeatedly causing engagement of the clutch (22) to increase and decrease.

13. The method of any of claims 10-12, comprising automatically causing clutch engagement to oscillate between two engagement conditions.

14. The method of any of claims 10-13, wherein the haptic indication comprises vibration of at least one component associated with the clutch ((22)

15. The method of claim 10, wherein the automatically controlling of an at least partially automatically controllable clutch (22) in a manner that results in a haptic indication to a driver is further based on an attempted start from stop of an associated vehicle.

## Patentansprüche

1. System zum Bereitstellen einer Anzeige an einen Fahrer, Folgendes umfassend:
eine Kupplung (22), die wenigstens zum Teil automatisch steuerbar ist; und ein Kupplungssteuermittel (30), das konfiguriert ist zum:
Steuern der Kupplung (22) auf eine Weise (44), die in einer haptischen Anzeige an einen Fahrer auf Grundlage wenigstens eines Bedarfs, einen Gang eines dazugehörigen Getriebes (26) umzuschalten, resultiert.

2. System nach Anspruch 1, wobei sich das Kupplungssteuermittel automatisch an die Menge des Eingriffs der Kupplung (22) anpasst, um die haptische Anzeige zu veranlassen.

3. System nach Anspruch 1 oder 2, wobei das Kupplungssteuermittel (30) automatisch und wiederholt veranlasst, dass das Eingreifen der Kupplung zunimmt oder abnimmt.

4. System nach einem der vorhergehenden Ansprüche, wobei das Kupplungssteuermittel (30) automatisch veranlasst, dass das Eingreifen der Kupplung (22) zwischen zwei Eingriffszuständen schwankt.

5. System nach einem der vorhergehenden Ansprüche, wobei die haptische Anzeige das Vibrieren wenigstens einer der Kupplung (22) zugehörigen Komponente umfasst.

6. System nach einem der vorhergehenden Ansprüche, wobei die haptische Anzeige ein bevorstehendes Abwürgen des Motors (24) simuliert.

7. Fahrzeug, umfassend das System nach einem der vorhergehenden Ansprüche und umfassend einen der Kupplung zugehörigen Motor (24); und das der Kupplung (22) zugehörige Getriebe (26);
wobei das automatische Steuern einer wenigstens zum Teil automatisch steuerbaren Kupplung auf eine Weise, die in einer haptischen Anzeige an einen Fahrer resultiert, ferner auf Grundlage der Folgenden geschieht:
Entsprechen einer Drehzahl des Motors (24) einem Fahrzeugstillstand; Angeben eines Wunsches durch einen Fahrer, die Drehzahl des Motors (24) zu erhöhen; und Befinden des Getriebes (26) in einem Gang, der nicht geeignet ist, um ein Bewegen des Fahrzeugs aus dem Stillstand einzuleiten.

8. Fahrzeug nach Anspruch 7, wobei die haptische Anzeige den Fahrer dazu verleiten soll, das Getriebe in einen anderen Gang umzuschalten.

9. Fahrzeug nach Anspruch 7 oder 8, wobei die Kupplung (22) manuell steuerbar ist; und das Getriebe (26) manuell steuerbar ist.

10. Verfahren zum Bereitstellen einer Anzeige an einen Fahrer, Folgendes umfassend:
automatisches Steuern einer wenigstens zum Teil automatisch steuerbaren Kupplung (22) auf eine Weise, die in einer haptischen Anzeige an einen Fahrer auf Grundlage wenigstens eines Bedarfs, einen Gang eines dazugehörigen Getriebes (26) umzuschalten, resultiert.

11. Verfahren nach Anspruch 10, umfassend ein automatisches Anpassen einer Menge von Eingriff der Kupplung (22), um die haptische Anzeige zu veranlassen.

12. Verfahren nach Anspruch 10 oder 11, umfassend ein automatisches und wiederholtes Veranlassen, dass das Eingreifen der Kupplung (22) zunimmt oder abnimmt.

13. Verfahren nach einem der Ansprüche 10-12, umfassend ein automatisches Veranlassen, dass das Eingreifen der Kupplung zwischen zwei Eingriffszuständen schwankt.

14. System nach einem der Ansprüche 10-13, wobei die haptische Anzeige ein Vibrieren wenigstens einer der Kupplung (22) zugehörigen Komponente umfasst.

15. Verfahren nach Anspruch 10, wobei das automatische Steuern einer wenigstens zum Teil steuerbaren Kupplung (22) auf eine Weise, die in einer haptischen Anzeige an einen Fahrer resultiert, ferner auf Grundlage eines versuchten Startens eines zugehörigen Fahrzeugs aus dem Stillstand geschieht.

## Revendications

1. Système pour fournir une indication à un conducteur, comprenant :
un embrayage (22) qui peut au moins partiellement être commandé automatiquement ; et
un moyen de commande d'embrayage (30) configuré pour :
commander l'embrayage (22) d'une manière (44) à aboutir à une indication haptique destinée à un conducteur sur la base d'au moins une nécessité de changer une vitesse d'une transmission associée (26).

2. Système selon la revendication 1, dans lequel le moyen de commande d'embrayage ajuste automatiquement une quantité de mise en prise de l'embrayage (22) pour provoquer l'indication haptique.

3. Système selon les revendications 1 ou 2, dans lequel le moyen de commande d'embrayage (30) provoque automatiquement et de manière répétée l'augmentation et la diminution de la mise en prise de l'embrayage.

4. Système selon une quelconque revendication précédente, dans lequel le moyen de commande d'embrayage (30) provoque automatiquement l'oscillation de la mise en prise d'embrayage (22) entre deux conditions de mise en prise.

5. Système selon une quelconque revendication précédente, dans lequel l'indication haptique comprend la vibration d'au moins un composant associé à l'embrayage (22).

6. Système selon une quelconque revendication précédente, dans lequel l'indication haptique simule un calage imminent du moteur (24).

7. Véhicule comprenant le système selon une quelconque revendication précédente et comprenant un moteur (24) associé à l'embrayage ; et la transmission (26) associée à l'embrayage (22) ;
la commande automatique d'un embrayage pouvant au moins partiellement être commandé automatiquement d'une manière à aboutir à une indication haptique destinée à un conducteur étant en outre basée sur :
une vitesse du moteur (24) correspondant à un arrêt de véhicule ; le conducteur indiquant un souhait d'augmenter la vitesse du moteur (24) ; et la transmission (26) étant dans une vitesse qui ne convient pas pour démarrer le mouvement du véhicule à partir de l'arrêt.

8. Véhicule selon la revendication 7, dans lequel l'indication haptique est destinée à inviter le conducteur à passer la transmission dans une vitesse différente.

9. Véhicule selon la revendication 7 ou 8, dans lequel l'embrayage (22) peut être commandé manuellement ; et la transmission (26) peut être commandée manuellement.

10. Procédé pour fournir une indication à un conducteur, comprenant : la commande automatique d'un embrayage (22) pouvant au moins partiellement être commandé automatiquement d'une manière à aboutir à une indication haptique destinée à un conducteur sur la base d'au moins une nécessité de changer une vitesse d'une transmission associée (26).

11. Procédé selon la revendication 10, comprenant l'ajustement automatique d'une quantité de mise en prise de l'embrayage (22) pour provoquer l'indication haptique.

12. Procédé selon les revendications 10 ou 11, comprenant le fait de provoquer automatiquement et de manière répétée l'augmentation et la diminution de la mise en prise de l'embrayage (22).

13. Procédé selon l'une quelconque des revendications 10 à 12, comprenant le fait de provoquer automatiquement l'oscillation de la mise en prise d'embrayage entre deux conditions de mise en prise.

14. Procédé selon l'une quelconque des revendications 10 à 13, dans lequel l'indication haptique comprend la vibration d'au moins un composant associé à l'embrayage (22).

15. Procédé selon la revendication 10, dans lequel la commande automatique d'un embrayage (22) pouvant au moins partiellement être commandé automatiquement d'une manière à aboutir à une indication haptique destinée à un conducteur est en outre basée sur une tentative de démarrage à partir de l'arrêt d'un véhicule associé.
